# EUROPEAN PATENT SPECIFICATION

(11) **EP 2 011 838 B1**
(45) Date of publication and mention of the grant of the patent: **21.12.2016**
(21) Application number: 07742853.0
(22) Date of filing: 25.04.2007
(51) Int. Cl.: C09D 7/12, B32B 15/08, B32B 27/20, C09D 5/08, F16B 33/00

(54) **COATING COMPOSITION COMPRISING SURFACE-TREATED MULTILAYER CARBON NANOFIBERS AND COATED ARTICLE**
BESCHICHTUNGSZUSAMMENSETZUNG ENTHALTEND OBERLÄCHE-BEHANDELTEN MEHRLAGIGEN KOHLENSTOFF-NANOFASERN UND BESCHICHTETER GEGENSTAND
COMPOSITION DE REVETEMENT COMPRENANT DES NANOFIBRES DE CARBONE MULTICOUCHES TRAITÉS EN SURFACE

(30) Priority: 27.04.2006 JP 2006122801
(43) Date of publication of application: 07.01.2009
(73) Proprietor: Takenaka Seisakusho Co., Ltd., Higashiosaka-shi, Osaka 574-0984 (JP); GSI Creos Corporation, Tokyo 102-0074 (JP); Inagaki, Kazuko, Nagaokakyo-shi, Kyoto 617-0856 (JP)
(72) Inventor: KUROYAMA, Shoji, Higashiosaka-shi, Osaka 578-0984 (JP); INAGAKI, Hiroshi, - (JP)
(74) Representative: Schwabe - Sandmair - Marx
(86) International application number: PCT/JP2007/059418
(87) International publication number: WO 2007/132684

(56) References cited:
- WO-A1-03/024798
- WO-A2-03/013199
- WO-A2-2005/012171
- WO-A2-2005/108485
- JP-A- 2004 183 127
- JP-A- 2005 007 622
- JP-A- 2005 163 203
- JP-B1- 42 022 047
- US-A1- 2003 122 111

## Description

### Technical Field

The present invention relates to a coating composition and a coated article. More specifically, the present invention relates to a coating composition capable of forming a coating film having excellent mechanical strength and corrosion resistance at the same time and a coated article having the coating film.

### Background Art

As methods of imparting corrosion resistance to surfaces of a machine part and a fastening member, which are formed of carbon steel and the like, and of preventing degradation thereof caused by friction, moisture, and the like, application of an inorganic coating composition and plating of metals such as zinc onto the surfaces of the parts and the members are generally well known. However, those methods have a problem in that corrosion resistance under natural environment or corrosion resistance with respect to chemical agents is insufficient.

As means for improving the corrosion resistance, a method of coating a material containing a fluorine resin which has excellent long-term corrosion resistance is proposed. The fluorine resin has a small friction coefficient, and exhibits satisfactory friction properties, and thereby being used for coating a sliding material. Further, the fluorine resin has a low tightening torque, and has therefore been used for a fastening member such as a bolt/nut. However, a fluorine resin coating film is soft and weak, and hence in the case of using the fluorine resin coating film to the sliding material, the fastening member, and the like, there are problems in that damage in the coating film which is applied to the surface of the metal material and the like is likely to occur, and that abrasion of the coating film is remarkable under severe sliding (friction) conditions.

As means for solving the problems of the fluorine resin coating film, a technology involving adding a fibrillated aramid fiber to the fluorine resin has been proposed (refer to Patent Document 1). Further, in order to retain peeling resistance even under severe friction conditions, a two-layer coating system has been proposed, in which a sliding layer formed of a resin including a fluorine resin and a resin-bonding layer including a polyimide resin and/or a polyamideimide resin and a fluorine resin between the surface of a coated material and the sliding layer has been proposed (refer to Patent Document 2). According to those technologies, there is attained an improvement in damage resistance of the fluorine resin coating film to some extent, but such an essential problem that the fluorine resin coating film is liable to be damaged is not solved at all. In addition, according to the technology described in Patent Document 2, another problem arises in that there is a large increase in the manufacturing cost.

The document WO-A 03/013,199 relates to conformal coatings that provide excellent shielding against electromagnetic interference (EMI). A conformal coating comprises an insulating layer and a conducting layer containing electrically conductive material. The insulating layer comprises materials for protecting a coated object. The conducting layer comprises materials that provide EMI shielding such as carbon black, carbon buckeyballs, carbon nanotubes, chemically-modified carbon nanotubes and combinations thereof. The insulating layer and the conductive layer may be the same or different, and may be applied to an object simultaneously or sequentially. Accordingly, the invention is also directed to objects that are partially or completely coated with a conformal coating that provides EMI shielding.

The document JP-A 2004/183,127 discloses that carbon nanofibers may be modified at their surface, strictly speaking at dangling bonds of the surface carbon atoms thereof, with a synthetic resin at a graft ratio of 1 to 200 %. Resin compositions containing such surface-modified carbon nanofibers are obtained by dispersing said surface-modified carbon nanofibers into a resin Moreover, coating compositions are disclosed, which coating compositions are obtained by dispersing the surface-modified carbon nanofiber into a solvent.

The document WO 2005/108 485 A2 discloses a composite material based on a polymer matrix in which carbon nanotubes are dispersed, and also a process for obtaining such a material. The process disclosed therein is based on the use, as compatibilizer, of a block copolymer obtained by controlled radical polymerization and having at least one block bearing acid and/or anhydride functions.

The document WO 2005/012171 A2 discloses methods of functionalizing carbon nanotubes, particularly single-wall carbon nanotubes, with organosilane species, wherein such functionalization enables fabrication of advanced polymer composites. It also discloses advanced CNT-polymer composites made with functionalized CNTs, and methods of making advanced CNT-polymer composites.

The document EP 1 243 677 A2 discloses a carbon fiber product comprising a coaxial stacking morphology of truncated conical tubular graphene layers.

In order to solve the above problems, a coating agent including a carbon nanofiber incorporated in a synthetic resin binder is proposed (refer to Patent Document 3). According to the technology, the damage resistance is largely improved. However, the coating film formed by the coating agent has such a problem that the corrosion resistance thereof is insufficient.

As described above, the coating agent which satisfies mechanical properties such as the damage resistance and the corrosion resistance at the same time is not yet obtained.
[Patent Document 1] JP 06-122785 A
[Patent Document 2] JP 2002-276665 A
[Patent Document 3] JP 2005-28802 A

### Problems to be solved by the Invention

The present invention has been accomplished to solve the above-mentioned problems, and an object of the present invention is to provide: a coating composition capable of forming a coating film which has excellent long-term corrosion resistance and mechanical properties such as impact resistance, ductility, hardness, and bending resistance, and also has excellent damage resistance against sliding; and a coated article having the coating film.

A coating composition according to the present invention **comprises:** a synthetic resin binder; a multilayer carbon nanofiber subjected to surface treatment with a non-conductive substance; and a dispersion medium,
wherein the multilayer carbon nanofiber is imparted with appropriate non-conductivity by the surface treatment with the non-conductive substance,
wherein the surface treatment is physical treatment with a cationic surfactant, wherein the cationic surfactant is Disperbyk-130, and
wherein the multilayer carbon nanofiber has a structure in which a plurality of tubular carbon network layers each having a different diameter are arranged coaxially.

Alternatively, the coating composition according to the present invention comprises: a synthetic resin binder; a multilayer carbon nanofiber subjected to surface treatment with a non-conductive substance; and a dispersion medium,
wherein the multilayer carbon nanofiber is imparted with appropriate non-conductivity by the surface treatment with the non-conductive substance,
wherein the surface treatment is chemical surface treatment, wherein the multilayer carbon nanofiber is grafted at least one part of a surface thereof in a graft-to method by a low or high molecular weight substance having a trimethoxysilyl group and/or
wherein the surface treatment is physical treatment with a cationic surfactant, wherein the cationic surfactant is Disperbyk-130,
wherein the multilayer carbon nanofiber has a structure in which a plurality of carbon network layers each having a bottomless cup shape are laminated in a nested manner, and
wherein a coating film to be obtained has a Knoop hardness (JIS Z 2251) of 20 Hk or more and a rust preventing ability determined by a salt spray test of 1,000 hours or more.

In a preferred embodiment of the invention, the multilayer carbon nanofiber is grafted at least at one part of a surface thereof.

In a preferred embodiment of the invention, the multilayer carbon nanofiber has a structure in which a plurality of carbon network layers each having a bottomless cup shape are laminated in a nested manner.

In a preferred embodiment of the invention, the multilayer carbon nanofiber has a structure in which a plurality of tubular carbon network layers each having a different diameter are arranged coaxially.

In a preferred embodiment of the invention, the coating composition includes 3 to 15 parts by weight of the multilayer carbon nanofiber and 10 to 300 parts by weight of the dispersion medium with respect to 100 parts by weight of the synthetic resin binder.

In a preferred embodiment of the invention, the synthetic resin binder includes a thermosetting resin.

In a preferred embodiment of the invention, the synthetic resin binder includes at least one selected from the group consisting of a phenol resin, an epoxy resin, a polyurethane resin, a silicone resin, a polyamideimide resin, and a water-based fluorine resin.

In a preferred embodiment of the invention, the dispersion medium includes a polar solvent.

In a preferred embodiment of the invention, the dispersion medium includes at least one selected from the group consisting of water, alcohols, N-methyl-2-pyrrolidone, dimethylacetamide, methylethyl ketone, and methylisobutyl ketone.

In a preferred embodiment of the invention, a coating film to be obtained has a Knoop hardness **(JIS Z 2251)** of 20 Hk or more and a rust preventing ability determined by a salt spray test of 200 hours or more.

According to another aspect of the present invention, a coated article is provided. The coated article includes a coating film formed of the above-described coating composition at least at one part of a surface of a substrate.

In a preferred embodiment of the invention, the substrate is selected from the group consisting of a metal industrial part, a bolt/nut, a shaft bearing, a sealing part, a fastening flange, a washer, a brake shoe, a jack part, and a sliding part of semiconductor manufacturing equipment.

### Effects of the Invention

According to the present invention, the coating composition capable of forming the coating film which satisfies the mechanical strength and the corrosion resistance at the same time can be provided, by using the multilayer carbon nanofiber whose surface is treated with the non-conductive substance. That is, according to the present invention, while maintaining the effect of the coating agent of improving the mechanical strength by using the so-called carbon nanotube, a problem of corrosion of the coating film caused by the electrical conductivity of the carbon nanotube can be solved.

### Brief Description of the Drawings

Fig. **1** is a graph showing results of a thermogravimetric analysis of a grafted carbon nanofiber used for a coating composition of Example 1 of the present invention.
Fig. **2** is an electron microscope photograph of the grafted carbon nanofiber used for the coating composition of Example 1 of the present invention.
Fig. **3** is a photograph showing a state after 1,500 hours from salt spraying to a coated article obtained in Example 1 of the present invention.
Fig. **4** is a photograph showing a comparison between a state after 2,000 hours from salt spraying of a coated article obtained in Example 3 of the present invention and a state after 2,000 hours from salt spraying of a coated article of Comparative Example 4.
Fig. **5** is a photograph showing a state after 24 hours from salt spraying of the coated article obtained in Comparative Example 4.

A coating composition of the present invention includes a synthetic resin binder, a multilayer carbon nanofiber subjected to surface treatment with a non-conductive substance, and a dispersion medium,
wherein the multilayer carbon nanofiber is imparted with appropriate non-conductivity by the surface treatment with the non-conductive substance,
wherein the surface treatment is physical treatment with a cationic surfactant, wherein the cationic surfactant is Disperbyk-130, and
wherein the multilayer carbon nanofiber has a structure in which a plurality of tubular carbon network layers each having a different diameter are arranged coaxially.

Alternatively, the coating composition according to the present invention comprises: a synthetic resin binder; a multilayer carbon nanofiber subjected to surface treatment with a non-conductive substance; and a dispersion medium,
wherein the multilayer carbon nanofiber is imparted with appropriate non-conductivity by the surface treatment with the non-conductive substance,
wherein the surface treatment is chemical surface treatment, wherein the multilayer carbon nanofiber is grafted at least one part of a surface thereof in a graft-to method by a low or high molecular weight substance having a trimethoxysilyl group and/or
wherein the surface treatment is physical treatment with a cationic surfactant, wherein the cationic surfactant is Disperbyk-130,
wherein the multilayer carbon nanofiber has a structure in which a plurality of carbon network layers each having a bottomless cup shape are laminated in a nested manner, and
wherein a coating film to be obtained has a Knoop hardness (JIS Z 2251) of 20 Hk or more and a rust preventing ability determined by a salt spray test of 1,000 hours or more.

As the synthetic resin binder, any appropriate synthetic resin may be adopted depending on its purpose and the kind of a substrate to be coated. The synthetic resin binder may be any of thermoplastic resins and thermosetting resins. Specific examples of the synthetic resins include: a phenol resin, an epoxy resin, a polyurethane resin, a silicone resin, a polyamideimide resin, a fluorine resin, a polyimide resin, a polyvinyl chloride resin, an alkyd resin, an acrylic resin, a melamine resin, a polystyrene resin, a vinyl ester resin, and a polyester resin; a blend thereof; a copolymer thereof; and a modified product thereof. In one embodiment, a preferred synthetic resin is a thermosetting resin, because the thermosetting resin can form a coating film which has excellent mechanical properties (in particular, hardness). In another embodiment, a preferred synthetic resin is any one of a phenol resin, an epoxy resin, a polyurethane resin, a silicone resin, a polyamideimide resin, and a water-based fluorine resin, because those resins have particularly excellent dispersibility of the carbon nanofiber. A particularly preferred synthetic resin is a phenol resin or a polyamideimide resin. Note that a form of the synthetic resin is not particularly limited. For example, the synthetic resin may be in a form of powder, pellet, or liquid composition containing the synthetic resin.

In the present specification, "multilayer carbon nanofiber" includes all carbon nanofibers other than a single-layer carbon nanofiber. More specifically, the multilayer carbon nanofiber is a carbon nanofiber having, in a structure thereof, two or more carbon network layers. Owing to this structure, the multilayer carbon nanofiber may have an extremely large number of functional groups on a surface thereof and/or may introduce an extremely large number of functional groups to a surface thereof. Accordingly, a surface treatment described below is performed extremely satisfactorily. As a result, the multilayer carbon nanofiber contributes to an improvement to a large extent of the mechanical strength of the coating film as a carbon nanofiber and can solve the problem of the corrosion resistance of the coating film, which has been the problem with conventional carbon nanotubes, because the multilayer carbon nanofiber is made non-conductive by simple surface treatment. A shape and/or a size of the multilayer carbon nanofiber is appropriately selected as long as the effect of the present invention can be achieved. In one embodiment, a length of the multilayer carbon nanofiber is preferably 5 nm to 100 µm and more preferably 20 nm to 10 µm. In another embodiment, a fiber diameter is preferably 5 nm to 300 nm and more preferably 5 nm to 250 nm. In addition, typical examples of the multilayer carbon nanofiber include: a carbon nanofiber having a structure in which a plurality of carbon network layers each having a bottomless cup shape are laminated in a nested manner; and a carbon nanofiber having a structure in which a plurality of tubular carbon network layers each having a different diameter are arranged coaxially. The detail of the carbon nanofiber having a structure in which a plurality of carbon network layers each having a bottomless cup shape are laminated in a nested manner is described in JP 2003-147644 A (disclosure of which is herein incorporated by reference), and the carbon nanofiber is available from GSI Creos Corporation under the trade name of Carbere (registered trademark). A typical example of the carbon nanofiber having a structure in which a plurality of tubular carbon network layers each having a different diameter are arranged coaxially includes a vapor growth carbon fiber (VGCF). The vapor growth carbon fiber is commercially available from, for example, SHOWA DENKO K.K., under the trade name of VGCF(R).

The multilayer carbon nanofibers described above are subjected to surface treatment with a non-conductive substance at least at one part of a surface thereof. By using such multilayer carbon nanofiber, a coating film in which corrosion resistance is remarkably improved while maintaining excellent mechanical strength thereof can be obtained. Those excellent effects are the findings which are obtained for the first time by incorporating the multilayer carbon nanofiber subjected to surface treatment into the coating composition, and such excellent effects are unexpected. It is presumed that the surface of the multilayer carbon nanofiber is electrically isolated by performing appropriate surface treatment, with a result that electrical conductivity of the coating film is suppressed and the corrosion resistance is remarkably improved. It is one of the great yields of the present invention that both of the mechanical strength and the corrosion resistance of the coating film are realized at the same time by using the multilayer carbon nanofiber subjected to surface treatment.

The chemical surface treatment and the physical surface treatment may be combined. In the present specification, "chemical surface treatment" refers to a treatment which modifies surface properties by a chemical change, and "physical surface treatment" refers to a treatment which modifies the surface properties without chemical reaction. As the non-conductive substance, any appropriate non-conductive substance may be adopted depending on the kind of the surface treatment to be adopted.

**In the present invention** the chemical surface treatment **is** grafting. As a method of grafting, "graft-from method" and "graft-to method" are typically exemplified. The graft-from method is a method including chemically introducing a functional group having polymerization-initiating ability at least to one part of a surface of the multilayer carbon nanofiber and growing low molecular weight substances or polymers from the functional group as a starting point. The graft-to method is a method of bonding, by chemical reaction, a low or high molecular weight substance having a functional group at a terminal and/or side chain of the molecule with the surface of the multilayer carbon nanofiber. As the low or high molecular weight substance growth method (typically polymerization method) to be used in the graft-from method. A radical polymerization method, an anion polymerization method, a cation polymerization method, a condensation polymerization method, and a coordination polymerization method **can be used.** For example, the grafting of the carbon nanofiber by the radical polymerization method can be performed in accordance with a method described in JP 2005-29696 A, disclosure of which is herein incorporated by reference. As the functional group of the low or high molecular weight substance to be used in the graft-to method. As a specific example of a useful functional group, a trimethoxysilyl group **is used.** As the non-conductive substance to be introduced to the surface of the multilayer carbon nanofiber by those chemical surface treatments, any appropriate substance may be adopted as long as the effect of the present invention can be achieved. A specific example thereof includes polymethyl methacrylate (PMMA). The number, the kind, the molecular weight, the molecular weight distribution, the introducing amount, and the coating thickness of the non-conductive substance to be introduced may be appropriately set depending on its purpose.

Typical examples of the physical surface treatment include mixing, coating, and treatment with a surfactant. The treatment with a surfactant is preferred, because the treatment not only imparts appropriate non-conductivity to the multilayer carbon nanofiber, but also improves the dispersibility of the multilayer carbon nanofiber in the coating composition. As the surfactant, any appropriate surfactant may be adopted as long as the effects of the surface treatment described above can be achieved. Therefore, the surfactant may be any of an anionic surfactant, a cationic surfactant, a nonionic surfactant, and an ampholytic surfactant. The cationic surfactant is preferred, because an improvement of corrosion resistance of a coating film to be obtained is prominent. A specific example of the surfactant includes Disperbyk-130 manufactured by BYK-Chemie. An amount of the surfactant to be used is preferably 2 to 20 parts by weight and more preferably 2 to 5 parts by weight with respect to 100 parts by weight of the synthetic resin binder.

The multilayer carbon nanofiber is preferably treated with the surfactant and by grafting. A synergistic effect can be achieved by performing the both treatments; therefore, the dispersibility in the composition and the mechanical strength and the corrosion resistance of the coating film become extremely excellent.

In addition to the surface treatments described above, the multilayer carbon nanofiber may be subjected to any appropriate treatment depending on its purpose. For example, a cutting treatment of the multilayer carbon nanofiber can be given. As specific means of the cutting treatment, a method using ultrasonic waves and a method using an acid solution can be exemplified. By subjecting the multilayer carbon nanofiber to the cutting treatment, an average aspect ratio thereof can be made small. As a result, the dispersibility of the multilayer carbon nanofiber in the coating composition can be improved. Further, the mechanical properties of the coating film can be appropriately adjusted.

The multilayer carbon nanofiber is contained in the coating composition at a ratio of preferably 3 to 15 parts by weight and more preferably 4 to 12 parts by weight with respect to 100 parts by weight of the synthetic resin binder. When the content is less than 3 parts by weight, a coating film having desired mechanical properties may not be obtained. When the content exceeds 15 parts by weight, a rusting preventing ability of the coating film may not be sufficient.

As the dispersion medium, any appropriate liquid substance may be adopted as long as the synthetic resin and the multilayer carbon nanofiber are appropriately dissolved and/or dispersed therein to give a homogeneous coating composition. The dispersion medium is preferably a polar solvent, because the carbon nanofiber can be dispersed therein extremely satisfactorily. Specific examples of the polar solvent include water, alcohols, N-methyl-2-pyrrolidone, dimethylacetamide, methylethyl ketone, and methylisobutyl ketone. They may be used alone or in combination. Further, it is needless to say that the polar solvent and a non-polar solvent (organic solvent and/or inorganinc solvent) may be used in combination depending on the kinds of the synthetic resin binder and the multilayer carbon nanofiber.

The amount of the dispersion medium to be used may be appropriately set depending on the kind of the dispersion medium, the kind and amount of the multilayer carbon nanofiber, the viscosity desired for the coating composition, and the like. For example, the dispersion medium is contained in the coating composition at a ratio of preferably 10 to 300 parts by weight and more preferably 30 to 150 parts by weight with respect to 100 parts by weight of the synthetic resin binder.

The coating composition of the present invention may further include a pigment if required. The pigment may be any of a natural pigment, a synthetic organic pigment, and a synthetic inorganic pigment. The pigment is preferably a rust preventing pigment. By using the rust preventing pigment, a coating film which has more excellent corrosion resistance can be formed. Specific examples of the rust preventing pigment include a composite oxide-based pigment, a chromium oxide-based pigment, and an organic pigment. An amount of the pigment to be used may be changed depending on its purpose. For example, the pigment may be contained in the coating composition at a ratio of preferably 1 to 30 parts by weight and more preferably 5 to 20 parts by weight with respect to 100 parts by weight of the synthetic resin binder. A particle diameter of the pigment may be appropriately set depending on dispersibility and aggregability thereof in the composition, and is preferably as fine as possible. For example, an average particle diameter of the pigment is in a range of 4 to 6 µm and a particle distribution thereof is in a range of 0.5 to 10 µm.

The coating composition of the present invention may further include a lubricant if required. By using the lubricant, a friction coefficient of the surface of the coated article can be controlled. As a result, in the case of using the coating composition of the present invention to a sliding member, for example, the abrasion caused by sliding can be prominently decreased. Specific examples of the lubricant include fluorine resin powder, molybdenum disulfide, and diamond nanopowder. They may be used alone or in combination. An amount of the lubricant to be used may be changed depending on its purpose (e.g., use environment of the coated article). For example, the lubricant may be contained in the coating composition at a ratio of preferably 0.5 to 10 parts by weight with respect to 100 parts by weight of the synthetic resin binder. An average particle diameter of the lubricant is preferably 0.01 to 4 µm and a substantially maximum value of the particle diameter is preferably 4 to 6 µm.

The coating composition of the present invention may further include any appropriate additive. Specific examples of the additive include a plasticizer, a thermal stabilizer, a light stabilizer, an antioxidant, an ultraviolet absorber, a flame retardant, an antistat, a compatibilizer, a cross-linking agent, a leveling agent, a thickener, an antifoaming agent, an electrostatic auxiliary, a catalyst, and a slip inhibitor. The number, the kind, and an amount of the additives to be added are appropriately selected depending on its purpose.

Hereinafter, a preferred example of a preparation method of the coating composition of the present invention is described.

First, a predetermined amount of a dispersion medium (preferably, a polar solvent) is charged in any appropriate container. Into the dispersion medium, a predetermined amount of the multilayer carbon nanofiber subjected to surface treatment with a non-conductive substance is loaded. For example, the grafted multilayer carbon nanofiber may be loaded thereinto, the multilayer carbon nanofiber and the surfactant may be loaded thereinto, or the grafted multilayer carbon nanofiber and the surfactant may be loaded thereinto in combination. It is preferred that the multilayer carbon nanofiber be gradually loaded into the dispersion medium. By such operation, the multilayer carbon nanofiber can be dispersed in the dispersion medium further homogeneously.

Next, the treatment which homogeneously disperses the multilayer carbon nanofiber in the dispersion medium is performed. Specific examples of the dispersion treatment include a mechanically stirring method and a method utilizing ultrasonic waves. As the mechanically stirring method, a method of dispersing the multilayer carbon nanofiber in the dispersion medium through revolutions of a stirring blade or a stirring rod by using a commercially available homogenizer, for example, can be given. The number of revolutions may be appropriately set depending on the kind of the dispersion medium, the amount of carbon nanofiber, and the like. For example, the number of revolutions is 2,000 to 10,000 rpm. For the method utilizing ultrasonic waves, a commercially available ultrasonic generator can be used. Those two methods may be used in combination. Thus, a dispersing element of dispersion medium/multilayer carbon nanofiber is prepared. By preparing the dispersing element of dispersion medium/multilayer carbon nanofiber in advance, the multilayer carbon nanofiber can be dispersed homogeneously in the coating composition.

Next, the dispersing element and the synthetic resin binder are mixed with each other. The mixing may be performed in the same manner as in the dispersion treatment. The pigment, the lubricant and/or any other additives may be added thereto at an appropriate time depending on the kind and the amount thereof. For example, the pigment may be added to the dispersing element together with the synthetic resin binder, or may be added to the dispersing element followed by the mixing of the synthetic resin binder. Finally, the ultrasonic waves are imparted to the mixture by using a commercially available ultrasonic generator, for example, whereby the foams generated at the time of dispersion and mixing can be removed. Thus, the coating composition of the present invention is prepared.

According to another aspect of the present invention, a coated article is provided. The coated article includes a coating film formed of the coating composition at least at one part of a surface of a substrate. Specific examples of the substrate include a metal industrial part, a bolt/nut, a shaft bearing, a sealing part, a fastening flange, a washer, a brake shoe, a jack part, and a sliding part of semiconductor manufacturing equipment. As a material of the substrate, there are exemplified: metals such as carbon steel, stainless steel, aluminum, titanium, and various alloys; ceramics such as alumina, zirconia, artificial graphite, and glass; various plastics; and various composite materials.

As a method of forming the coating film on the surface of the substrate, a method of applying the coating composition and a method of immersing the substrate in the coating composition are exemplified. Specific examples of application means include spraying, brushing, and rolling. A highly homogeneous coating film is formed by heat treatment or drying at appropriate temperature after the application. The temperature of the heat treatment or drying may be changed depending on the kind of the synthetic resin binder. For example, in the case where the synthetic resin binder is a thermosetting resin, the heat treatment temperature is preferably 100 to 300°C. In the present case, the binder is cured through cross-linking by the heat treatment, and a coating film which has an extremely high hardness may be formed. Further, for example, in the case where the synthetic resin binder is a thermoplastic resin, the drying temperature is preferably 30 to 100°C. In the present case, the dispersion medium in the coating composition is evaporated by the drying treatment, and a highly homogeneous coating film may be formed.

A thickness of the coating film to be formed may be appropriately set depending on its purpose. The thickness may be controlled by adjusting an application amount of the coating composition. The coating film may be a thick film having a thickness of 1 mm or more or a thin film having a thickness of 5 to 50 µm, for example. For example, the thickness of the coating film is adjusted to 5 to 50 µm to thereby make it easy for the thickness thereof to be within a dimensional tolerance in the case where the substrate is formed of a metal and is used as a machine part.

In the present invention, a Knoop hardness of the coating film is preferably 20 Hk or more, more preferably 30 Hk or more, and most preferably 60 Hk or more. When the coating film has the above Knoop hardness, practically sufficient damage resistance with respect to sliding can be provided. For example, a Knoop hardness of a coating film formed of an inorganic coating medium of zinc powder is about 30 Hk and a Knoop hardness of zinc plating is about 150 Hk. According to a preferred embodiment of the present invention, the coating film formed of the coating composition is extremely useful, because the coating film can realize a Knoop hardness equivalent to the Knoop hardness of zinc plating, and the corrosion resistance of the coating film is remarkably excellent compared with that of a plating film as described below. An upper limit of practical Knoop hardness is about 200 Hk. Note that "Knoop hardness" used in the present specification refers to a value obtained in accordance with "Knoop hardness test - Test method" described in JIS Z 2251.

In addition, a torque coefficient of the coating film is preferably 0.15 or less and more preferably 0.10 or less. When the torque coefficient has the above value, friction at the time of sliding is decreased, so that the damage caused by the sliding can be sufficiently avoided. A lower limit of practical torque coefficient is about 0.05. Note that "torque coefficient" used in the present specification refers to a value obtained in accordance with "Torque coefficient of set" described in JIS B 1186.

In addition, rust preventing ability of the coating film is preferably 200 hours or more, more preferably 450 hours or more, and most preferably 1,000 hours or more. The longer the rust preventing ability is maintained, the more preferred. It is one of the major yields of the present invention that the foregoing remarkably excellent rust preventing ability (i.e., corrosion resistance) has been realized while maintaining the mechanical strength (e.g., Knoop hardness and torque coefficient). Note that "rust preventing ability" used in the present specification refers to a value obtained in accordance with "Methods of salt spray testing" described in JIS Z 2371.

Hereinafter, the present invention is described in detail by way of examples, but is not limited thereto.

### (Example 1)

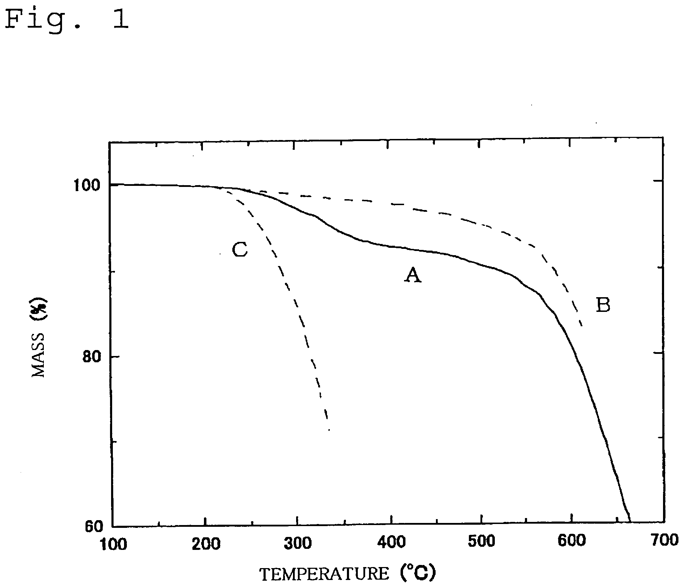

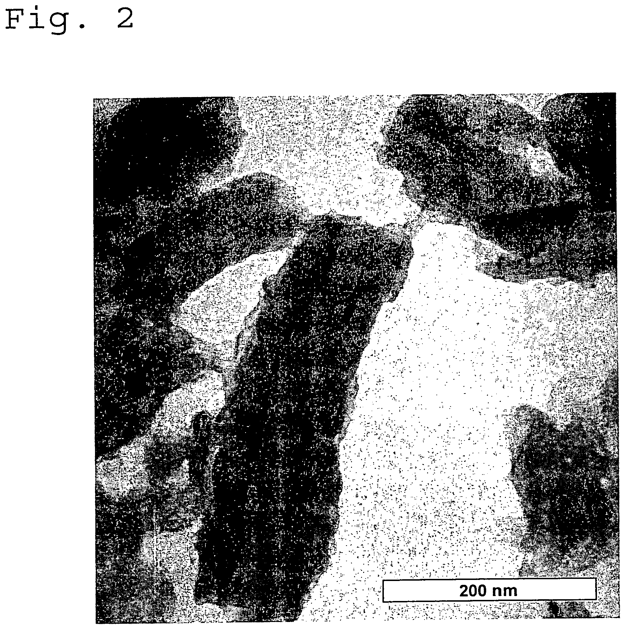

5 g of TMSP-PMMA was dissolved per 90 g of N-methyl-2-pyrrolidone at room temperature to prepare a solution. Here, TMSP-PMMA represents poly(methyl methacrylate) having a 3-(trimethoxysilyl)propyl group at a molecular terminal thereof. TMSP-PMMA had a number average molecular weight of 2,700 and a molecular weight distribution of 1.2. To the solution, 5 g of a carbon nanofiber having a structure in which a plurality of carbon network layers each having a bottomless cup shape are laminated in a nested manner (manufactured by GSI Creos Corporation, trade name: Carbere (registered trademark)) was gradually added. Next, ultrasonic waves were imparted to the mixture for about 30 minutes by using a commercially available ultrasonic generator (100 kHz) to promote dispersion of the carbon nanofiber. Subsequently, the resultant was stirred overnight (12 hours) at 100°C, whereby a graft reaction of TMSP-PMMA to a surface of the carbon nanofiber was proceeded. Fig. **1** is a graph showing a result of a thermogravimetric analysis of a reaction product. A solid line **A** in the graph represents a behavior of the reaction product and broken lines **B** and **C** represent behaviors of the carbon nanofiber alone and TMSP-PMMA alone, respectively. As a result of analyzing the graph, it was considered that about 5 parts by weight of TMSP-PMMA was grafted with respect to 100 parts by weight of the carbon nanofiber. Further, Fig. **2** is an electron microscope photograph of the grafted carbon nanofiber. As is clear from the photograph, it can be seen that a tubular carbon nanofiber at the center is coated with PMMA. Here, it was presumed that unreacted TMSP-PMMA (about 95% of the added amount) was present in the reaction solution, but the unreacted TMSP-PMMA might be removed by an appropriate means. In this example, the reaction solution obtained above was used as it is for a preparation of the following coating composition. The unreacted TMSP-PMMA may have functions as a physical surface treatment agent.

To the reaction solution, a predetermined amount of a liquid resol type phenol resin was gradually added at room temperature. Next, ultrasonic treatment was performed in the same manner as described above, followed by stirring treatment at 10,000 rpm for about 20 minutes by using a commercially available homogenizer stirring apparatus (having 4 stirring blades), whereby the coating composition was obtained. Note that, for the coating composition, 100 parts by weight of N-methyl-2-pyrrolidone, 5 parts by weight of the carbon nanofiber, and 5 parts by weight of (total of unreacted and reacted) TMSP-PMMA with respect to 100 parts by weight of the solid content of the phenol resin were used.

Next, an SPCC cold-rolled steel sheet degreased with ethyl alcohol (length: 150 mm, width: 70 mm, thickness: 0.8 mm) was used as a substrate. The coating composition was applied onto a whole surface of the substrate by spray method, and the resultant was subjected to heat treatment at about 200°C, whereby a coating film having a thickness of 40 to 50 µm was formed. The spray application was performed by using a pressure feed-type air spray gun (WIDER-61 manufactured by Iwata Tosoki K.K., nozzle diameter: 1.3 mm) under the following conditions: an air pressure of 0.29 to 0.34 MPa; and a coating composition discharge rate of 95 to 200 ml/min. The thickness of the coating film was measured in accordance with JIS K 5600-1-7 by using an electromagnetic coating thickness tester (LZ-330 manufactured by Kett Electric Laboratory). Further, a cross section of the coated article was observed by a scanning microscope and it was confirmed that there were no notable void and the like at an interface of the substrate and the coating film. In addition, an M20 bolt having a thread length of 100 mm and an M20 hexagonal nut having a height of 16 mm were used as the substrates, and a coating film was formed on a whole surface of each of the substrates in the same manner as described above.

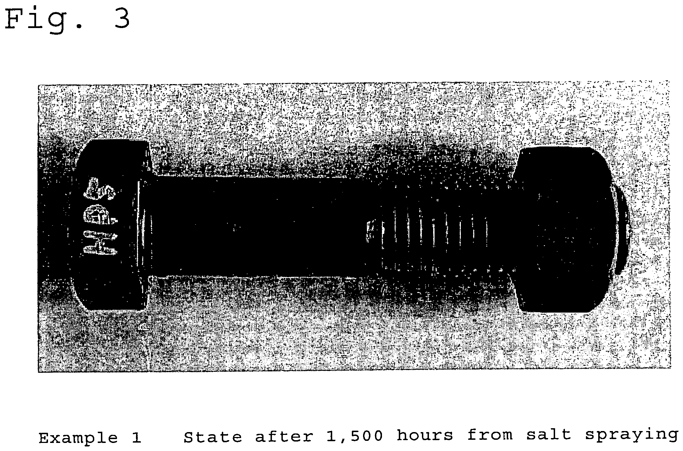

For each of the obtained coating films, the following evaluations were conducted. Results thereof are shown in Table 1 below.
(1) Adhesiveness: Adhesiveness of the coating film with respect to the SPCC cold-rolled steel sheet substrate was evaluated in accordance with JIS K 5600-5-6.
(2) Hardness: The coating film formed on the SPCC cold-rolled steel sheet substrate was measured for pencil scratch hardness and Knoop hardness to evaluate hardness. The measurement of the pencil scratch hardness was performed in accordance with JIS K 5600-5-4. For the pencil scratch hardness, the hardness which did not cause a scratch on the coating film (pencil hardness) was measured. The measurement of the Knoop hardness was performed in accordance with JIS Z 2251.
(3) Bending property: Bending property was evaluated in accordance with JIS K 5600-5-4. At the time of the evaluation, a surface of the coating film at a bending part after the bending under the set conditions was performed was observed with a 40-magnitude microscope, and checked for presence/absence of cracks or peelings, whereby the bending property was judged.
(4) Impact resistance: The measurement of impact resistance was performed in accordance with DuPont system shown in JIS K 5600-5-3. After 1,000 g-weights each having a different tip curvature radius thereof were dropped on the coating film from a height of 50 cm, the coating film was observed with a 40-magnitude microscope, and checked for presence/absence of cracks or peelings, whereby the impact resistance was judged.
(5) Bolt/nut fitting test: A thread part of the bolt/nut on which the coating film was formed was evaluated for a torque coefficient value (friction resistance) and a rupture of the coating film. Axial force of 20 tons was applied to the bolt and nut. The torque coefficient value of the thread part was determined in accordance with JIS B 1186. The test was performed for 5 sets of bolt/nut. The rupture of the coating film was evaluated by determining a proportion of the parts which had been missed by the damage of the coating film of the bolt/nut.
(6) Corrosion resistance: Corrosion resistance was evaluated by a salt spray test. The salt spray test was performed in accordance with JIS Z 2371. Further, a photograph of a state after 1,500 hours from salt spraying of the coated article is shown in Fig. **3****.**

**[Table 1]**

| | Adhesiveness | Pencil hardness | Knoop hardness (Hk) | Bending property (diameter of core rod :mm) | Impact resistance (curvature radius of weight :mm) | Torque coeffic ient | Rupture of coating film | Salt spray test (hr) |
|---|---|---|---|---|---|---|---|---|
| Example 1 | Satisfactory | 7H | 43 | 4 | 3 | 0.12 | About 5% | 1,500 or more |
| Example 2 | Satisfactory | 6H | 40 | 4 | 3 | 0.13 | About 5% | 2,000 |
| Example 3 | Satisfactory | 7H | 71 | 2 | 1.8 | 0.11 | Absence | 2,000 |
| Example 4 | Satisfactory | 6H | 41 | 4 | 6 | 0.15 | About 5% | 2,000 |
| Example 5 | Satisfactory | 8H | 62 | 2 | 3 | 0.13 | Absence | 1,500 |
| **Reference** Example 6 | Satisfactory | 6H | 40 | 4 | 3 | 0.13 | About 5% | 480 |
| **Reference** Example 7 | Satisfactory | 6H | 41 | 4 | 6 | 0.15 | About 5% | 480 |
| Example 8 | Satisfactory | 7H | 20 | 6 | 3 | 0.15 | About 5% | 240 |
| Example 9 | Satisfactory | 7H | 20 | 6 | 3 | 0.14 | About 5% | 240 |
| Comparative Example 1 | Satisfactory | 6H | 45 | 4 | 6 | 0.13 | Absence | 24 |
| Comparative Example 2 | Satisfactory | 7H | 88 | 4 | 3 | 0.10 | Absence | 24 |
| Comparative Example 3 | Satisfactory | 6H | 40 | 6 | 6 | 0.15 | Absence | 3 |
| Comparative Example 4 | Satisfactory | 7H | 60 | 4 | 3 | 0.13 | Absence | 3 |
| Comparative Example 5 | Satisfactory | 6H | 18 | 6 | 9 | 0.15 | About 10% | 2,000 |
| Comparative Example 6 | Satisfactory | 6H | 15 | 6 | 9 | 0.15 | About 10% | 1,000 |

### (Example 2)

2 ml of a cationic surfactant (Disperbyk-130 manufactured by BYK-Chemie) was used per 100 ml of N-methyl-2-pyrrolidone to prepare a surface treatment solution of the carbon nanofiber. To the surface treatment solution, a predetermined amount of the carbon nanofiber having a structure in which a plurality of carbon network layers each having a bottomless cup shape are laminated in a nested manner (manufactured by GSI Creos Corporation, trade name: Carbere (registered trademark)) was gradually added. The mixture was stirred for 2 to 3 minutes by using a stainless stirring rod, and surface treatment (surfactant treatment) of the carbon nanofiber was performed. Next, ultrasonic waves are imparted to the mixture for about 30 minutes by using a commercially available ultrasonic generator (100 kHz), whereby dispersion and the surface treatment of the carbon nanofiber were promoted. Further, the resultant was stirred at 10,000 rpm for about 20 minutes by using the commercially available homogenizer stirring apparatus (having 4 stirring blades), whereby the dispersion and the surface treatment of the carbon nanofiber were further promoted. Thus, a dispersing element of dispersion medium/multilayer carbon nanofiber was prepared.

Next, to the dispersing element, a predetermined amount of the liquid resol type phenol resin was gradually added. Subsequently, the dispersion treatment was performed by the ultrasonic waves and the homogenizer in the same manner as described above, whereby a coating composition was obtained. Note that, for the coating composition, 100 parts by weight of N-methyl-2-pyrrolidone and 4.73 parts by weight of the carbon nanofiber with respect to 100 parts by weight of the solid content of the phenol resin were used. The coating composition was used to form a coating film in the same manner as in Example 1. The obtained coating film was subjected to the same evaluation as in Example 1. Results thereof are shown in Table 1.

### (Example 3)

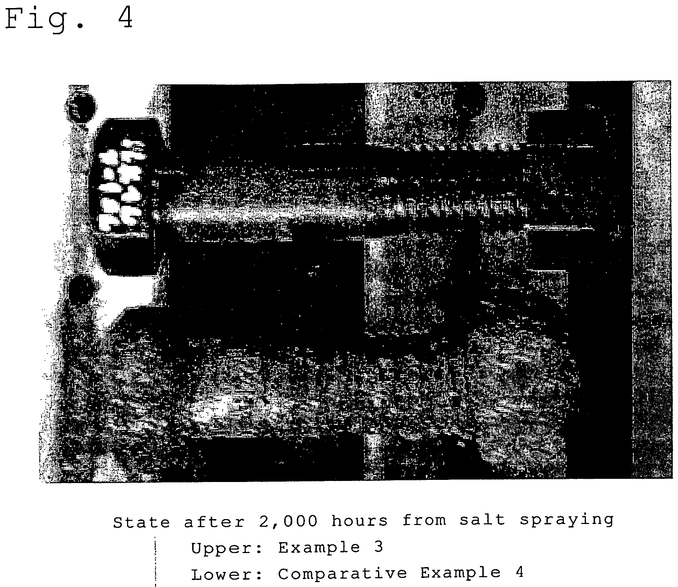

A coating composition was prepared in the same manner as in Example 2 except that 11.05 parts by weight of the carbon nanofiber with respect to 100 parts by weight of the solid content of the phenol resin was used. The coating composition was used to form a coating film in the same manner as in Example 1. The obtained coating film was subjected to the same evaluation as in Example 1. Results thereof are shown in Table 1. In addition, a photograph showing a comparison between a state after 2,000 hours from salt spraying of the coated article obtained in Example 3 and a state after 2,000 hours from salt spraying of a coated article of Comparative Example 4 to be described below is shown in Fig. **4****.**

### (Example 4)

A coating composition was prepared in the same manner as in Example 2 except that 100 parts by weight of a polyamideimide resin (solid content) was used instead of 100 parts by weight of the phenol resin (solid content) and 4.55 parts by weight of the carbon nanofiber with respect to 100 parts by weight of the solid content of the polyamideimide resin was used. The coating composition was used to form a coating film in the same manner as in Example 1 except that the drying temperature was set to 180°C. The obtained coating film was subjected to the same evaluation as in Example 1. Results thereof are shown in Table 1.

### (Example 5)

A coating composition was prepared in the same manner as in Example 4 except that 10.64 parts by weight of the carbon nanofiber with respect to 100 parts by weight of the solid content of the polyamideimide resin was used. The coating composition was used to form a coating film in the same manner as in Example 4. The obtained coating film was subjected to the same evaluation as in Example 1. Results thereof are shown in Table 1.

### (Reference Example 6) (not in accordance with the present invention)

A coating composition was prepared in the same manner as in Example 2 except that an anionic surfactant (manufactured by BYK-Chemie, trade name: Anti-Terre-206) was used instead of the cationic surfactant. The coating composition was used to form a coating film in the same manner as in Example 1. The obtained coating film was subjected to the same evaluation as in Example 1. Results thereof are shown in Table 1.

### (Reference Example 7) (not in accordance with the present invention)

A coating composition was prepared in the same manner as in Example 4 except that the anionic surfactant was used instead of the cationic surfactant. The coating composition was used to form a coating film in the same manner as in Example 1. The obtained coating film was subjected to the same evaluation as in Example 1. Results thereof are shown in Table 1.

### (Example 8)

A coating composition was prepared in the same manner as in Example 2 except that 4.73 parts by weight of a carbon nanofiber having a structure in which a plurality of tubular carbon network layers each having a different diameter are arranged coaxially (VGCF (R) manufactured by SHOWA DENKO K.K.) was used instead of the carbon nanofiber having a structure in which a plurality of carbon network layers each having a bottomless cup shape are laminated in a nested manner. The coating composition was used to form a coating film in the same manner as in Example 1. The obtained coating film was subjected to the same evaluation as in Example 1. Results thereof are shown in Table 1.

### (Example 9)

A coating composition was prepared in the same manner as in Example 4 except that 4.55 parts by weight of a carbon nanofiber having a structure in which a plurality of tubular carbon network layers each having a different diameter are arranged coaxially (VGCF (R) manufactured by SHOWA DENKO K.K.) was used instead of the carbon nanofiber having a structure in which a plurality of carbon network layers each having a bottomless cup shape are laminated in a nested manner. The coating composition was used to form a coating film in the same manner as in Example 4. The obtained coating film was subjected to the same evaluation as in Example 1. Results thereof are shown in Table 1.

### (Comparative Example 1)

A coating composition was prepared in the same manner as in Example 2 except that 4.73 parts by weight of an ordinary single-layer carbon nanotube (SWCNT manufactured by CORENET INTERNATIONAL Corporation) was used instead of the carbon nanofiber having a structure in which a plurality of carbon network layers each having a bottomless cup shape are laminated in a nested manner. The coating composition was used to form a coating film in the same manner as in Example 1. The obtained coating film was subjected to the same evaluation as in Example 1. Results thereof are shown in Table 1.

### (Comparative Example 2)

A coating composition was prepared in the same manner as in Comparative Example 1 except that 11.05 parts by weight of a single-layer carbon nanotube was used. The coating composition was used to form a coating film in the same manner as in Example 1. The obtained coating film was subjected to the same evaluation as in Example 1. Results thereof are shown in Table 1.

### (Comparative Example 3)

A coating composition was prepared in the same manner as in Example 4 except that 4.55 parts by weight of the ordinary single-layer carbon nanotube (SWCNT manufactured by CORENET INTERNATIONAL Corporation) was used instead of the carbon nanofiber having a structure in which a plurality of carbon network layers each having a bottomless cup shape are laminated in a nested manner. The coating composition was used to form a coating film in the same manner as in Example 1. The obtained coating film was subjected to the same evaluation as in Example 1. Results thereof are shown in Table 1.

### (Comparative Example 4)

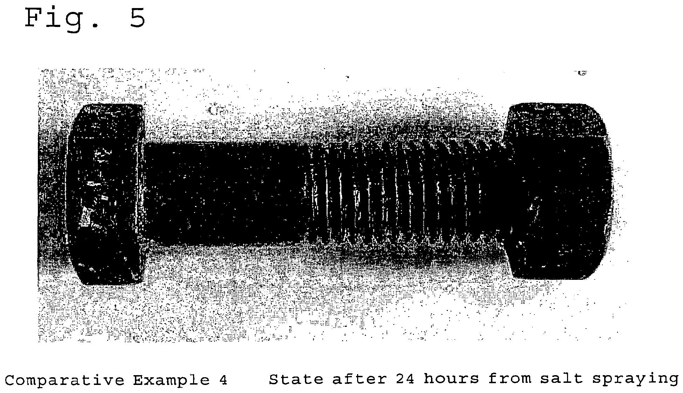

A coating composition was prepared in the same manner as in Comparative Example 3 except that 10.64 parts by weight of the single-layer carbon nanotube was used. The coating composition was used to form a coating film in the same manner as in Example 1. The obtained coating film was subjected to the same evaluation as in Example 1. Results thereof are shown in Table 1. In addition, a photograph showing a state after 2,000 hours from salt spraying of the coated article obtained in Comparative Example 4 together with the state after 2,000 hours from salt spraying of the coated article of Example 3 is shown in Fig. **4****,** and a photograph showing a state after 24 hours from salt spraying of the coated article obtained in Comparative Example 4 is shown in Fig. **5****.**

### (Comparative Example 5)

A coating composition was prepared in the same manner as in Example 2 except that 4.73 parts by weight of carbon black was used instead of the carbon nanofiber having a structure in which a plurality of carbon network layers each having a bottomless cup shape are laminated in a nested manner. The coating composition was used to form a coating film in the same manner as in Example 1. The obtained coating film was subjected to the same evaluation as in Example 1. Results thereof are shown in Table 1.

### (Comparative Example 6)

A coating composition was prepared in the same manner as in Example 4 except that 4.55 parts by weight of the carbon black was used instead of the carbon nanofiber having a structure in which a plurality of carbon network layers each having a bottomless cup shape are laminated in a nested manner. The coating composition was used to form a coating film in the same manner as in Example 4. The obtained coating film was subjected to the same evaluation as in Example 1. Results thereof are shown in Table 1.

As is clear from Table 1, it can be seen that the coating compositions of the examples of the present invention each form a coating film which satisfies both the mechanical properties (in particular, pencil hardness and Knoop hardness) and the corrosion resistance (salt spray test) at the same time. More specifically, the improvement in the corrosion resistance of the coating compositions of the examples of the present invention is more remarkable compared with that of the coating compositions of Comparative Examples 1 to 4 each using the single-layer carbon nanofiber. In particular, the coating composition of Example 1 in which the carbon nanofiber having a structure in which a plurality of carbon network layers each having a bottomless cup shape are laminated in a nested manner and being grafted with PMMA is used and the coating compositions of Examples 2 to 5 which are subjected to the surface treatment with the cationic surfactant are incommensurably improved in the corrosion resistance compared with the coating compositions of Comparative Examples 1 to 4 each using the single-layer carbon nanofiber. Further, the coating compositions of the examples of the present invention are remarkably improved in the mechanical properties (in particular, Knoop hardness, bending property, impact resistance, and rupture of coating film) compared with the coating compositions of Comparative Examples 5 and 6 each of which does not use the carbon nanofiber (and does use the carbon black).

### Industrial Applicability

The coating composition of the present invention may be appropriately utilized for coating machine parts such as the metal industrial part, various fastening parts such as the bolt/nut, the shaft bearing, various sealing parts, the fastening flange, the washer, the brake shoe, the jack part, and the sliding part of semiconductor manufacturing equipment. Further, the coating composition of the present invention is also applicable to lining coating of various environmental deprivations.

## Claims

1. A coating composition, comprising:
• a synthetic resin binder;
• a multilayer carbon nanofiber subjected to surface treatment with a non-conductive substance; and
• a dispersion medium,
wherein the multilayer carbon nanofiber is imparted with appropriate non-conductivity by the surface treatment with the non-conductive substance, wherein the surface treatment is physical treatment with a cationic surfactant, and wherein the multilayer carbon nanofiber has a structure in which a plurality of tubular carbon network layers each having a different diameter are arranged coaxially.

2. A coating composition, comprising:
• a synthetic resin binder;
• a multilayer carbon nanofiber subjected to surface treatment with a non-conductive substance; and
• a dispersion medium,
wherein the multilayer carbon nanofiber is imparted with appropriate non-conductivity by the surface treatment with the non-conductive substance,
wherein the surface treatment is chemical surface treatment, wherein the multilayer carbon nanofiber is grafted at least one part of a surface thereof in a graft-to method by a low or high molecular weight substance having a trimethoxysilyl group, and/or
wherein the surface treatment is physical treatment with a cationic surfactant,
wherein the multilayer carbon nanofiber has a structure in which a plurality of carbon network layers each having a bottomless cup shape are laminated in a nested manner, and
wherein a coating film to be obtained has a Knoop hardness (JIS Z 2251) of 20 Hk or more and a rust preventing ability determined by a salt spray test of 1,000 hours or more.

3. A coating composition according to claim 1 or claim 2, wherein the coating composition comprises 3 to 15 parts by weight of the multilayer carbon nanofiber and 10 to 300 parts by weight of the dispersion medium with respect to 100 parts by weight of the synthetic resin binder.

4. A coating composition according to any one of claims 1 to 3, wherein the synthetic resin binder comprises a thermosetting resin.

5. A coating composition according to any one of claims 1 to 4, wherein the synthetic resin binder comprises at least one selected from the group consisting of a phenol resin, an epoxy resin, a polyurethane resin, a silicone resin, a polyamideimide resin, and a water-based fluorine resin.

6. A coating composition according to any one of claims 1 to 5, wherein the dispersion medium comprises a polar solvent.

7. A coating composition according claim 6, wherein the dispersion medium comprises at least one selected from the group consisting of water, alcohols, N-methyl-2-pyrrolidone, dimethylacetamide, methylethyl ketone, and methylisobutyl ketone.

8. A coated article, comprising a coating film formed of the coating composition according to any one of claims 1 to 7 at least at one part of a surface of a substrate.

9. A coated article according to claim 8, wherein the substrate is selected from the group consisting of a metal industrial part, a bolt/nut, a shaft bearing, a sealing part, a fastening flange, a washer, a brake shoe, a jack part, and a sliding part of semiconductor manufacturing equipment.

## Patentansprüche

1. Beschichtungszusammensetzung, umfassend
• ein synthetisches Harzbindemittel;
• eine viellagige Kohlenstoff-Nanofaser, die einer Oberflächenbehandlung mit einer nicht-leitenden Substanz unterworfen wurde; und
• ein Dispersionsmedium,
wobei der viellagigen Kohlenstoff-Nanofaser eine passende Nicht-Leitfähigkeit verliehen wird durch die Oberflächenbehandlung mit der nicht-leitenden Substanz,
wobei die Oberflächenbehandlung eine physikalische Behandlung mit einem kationischen oberflächenaktiven Mittel ist und wobei die viellagige Kohlenstoff-Nanofaser eine Struktur aufweist, in der eine Mehrzahl von Netzwerk-Schichten aus rohrförmigem Kohlenstoff, von denen jede einen verschiedenen Durchmesser aufweist, koaxial angeordnet ist.

2. Beschichtungszusammensetzung, umfassend
• ein synthetisches Harzbindemittel;
• eine viellagige Kohlenstoff-Nanofaser, die einer Oberflächenbehandlung mit einer nicht-leitenden Substanz unterworfen wurde; und
• ein Dispersionmedium,
wobei der viellagigen Kohlenstoff-Nanofaser eine passende Nicht-Leitfähigkeit verliehen wird durch die Oberflächenbehandlung mit der nicht-leitenden Substanz,
wobei die Oberflächenbehandlung eine chemische Oberflächenbehandlung ist, wobei die viellagige Kohlenstoff-Nanofaser auf wenigstens einen Teil einer Oberfläche davon in einem Aufpfropfverfahren aufgepfropft wird mit einer Substanz mit niedrigem oder hohem Molekulargewicht, die eine Trimethoxysilyl-Gruppe aufweist, und/oder wobei die Oberflächenbehandlung eine physikalische Behandlung mit einem kationischen oberflächenaktiven Mittel ist, wobei die viellagige Kohlenstoff-Nanofaser eine Struktur aufweist, in der eine Mehrzahl von Kohlenstoff-Netzwerk-Schichten, von denen jede eine Form eines Bechers ohne Boden aufweist, in einer ineinander geschachtelten Weise laminiert ist, und wobei ein zu erhaltender Beschichtungsfilm eine Knoop-Härte (JIS Z 2251) von 20 Hk oder mehr und ein Rostschutzvermögen, das mittels eines Salz-Sprüh-Tests bestimmt wird, von 1.000 Stunden oder mehr aufweist.

3. Beschichtungszusammensetzung nach Anspruch 1 oder Anspruch 2, wobei die Beschichtungszusammensetzung 3 bis 15 Gew.-Teile der viellagigen Kohlenstoff-Nanofaser und 10 bis 300 Gew.-Teile des Dispersionsmediums umfasst, bezogen auf 100 Gew.-Teile des synthetischen Harzbindemittels.

4. Beschichtungszusammensetzung nach irgendeinem der Ansprüche 1 bis 3, wobei das synthetische Harzbindemittel ein thermohärtendes Harz umfasst.

5. Beschichtungszusammensetzung nach irgendeinem der Ansprüche 1 bis 4, wobei das synthetische Harzbindemittel wenigstens ein Harz umfasst, das ausgewählt ist aus der Gruppe, die besteht aus einem Phenolharz, einem Epoxyharz, einem Polyurethanharz, einem Siliconharz, einem Polyamidimidharz und einem Fluorharz auf Wasserbasis.

6. Beschichtungszusammensetzung nach irgendeinem der Ansprüche 1 bis 5, wobei das Dispersionsmedium ein polares Lösungsmittel umfasst.

7. Beschichtungszusammensetzung nach Anspruch 6, wobei das Dispersionsmedium wenigstens ein Lösungsmittel umfasst, das ausgewählt ist aus der Gruppe, die besteht aus Wasser, Alkoholen, N-Methyl-2-pyrrolidon, Dimethylacetamid, Methylethylketon und Methylisobutylketon.

8. Beschichteter Gegenstand, umfassend einen Beschichtungsfilm, der aus der Beschichtungszusammensetzung nach irgendeinem der Ansprüche 1 bis 7 gebildet ist, auf wenigstens einem Teil einer Oberfläche eines Substrats.

9. Beschichteter Gegenstand nach Anspruch 8, wobei das Substrat ausgewählt ist aus der Gruppe, die besteht aus einem Industrieteil aus Metall, einem Bolzen/einer Mutter, einem Lager für eine Welle, einem Dichtungs-Teil, einem Anschlußflansch, einer Beilagscheibe, einer Bremsbacke, einem Stecker-/Buchsen-Teil und einem Gleitstück einer Vorrichtung zur Halbleiter-Herstellung.

## Revendications

1. Composition de revêtement, comprenant :
• un liant en résine synthétique ;
• une nanofibre de carbone multicouche soumise à un traitement de surface au moyen d'une substance non conductrice ; et
• un milieu de dispersion,
où la nanofibre de carbone multicouche est dotée d'une non-conductivité adéquate par le traitement de surface au moyen de la substance non conductrice, où le traitement de surface est un traitement physique au moyen d'un tensioactif cationique,
et
où la nanofibre de carbone multicouche présente une structure telle qu'une pluralité de couches de réseaux de carbone tubulaire ayant chacun un diamètre différent sont agencées de manière coaxiale.

2. Composition de revêtement, comprenant :
• un liant en résine synthétique ;
• une nanofibre de carbone multicouche soumise à un traitement de surface au moyen d'une substance non conductrice ; et
• un milieu de dispersion,
où la nanofibre de carbone multicouche est dotée d'une non-conductivité adéquate par le traitement de surface au moyen de la substance non conductrice,
où le traitement de surface est un traitement de surface chimique, où la nanofibre de carbone multicouche est greffée sur au moins une partie de sa surface par un procédé de greffage au moyen d'une substance à masse moléculaire faible ou élevée ayant un groupe trimethoxysilyl, et/ou
où le traitement de surface est un traitement physique au moyen d'un tensioactif cationique,
où la nanofibre de carbone multicouche présente une structure telle qu'une pluralité de couches de réseaux de carbone ayant chacun la forme d'une coupelle sans fond sont laminées de manière imbriquée, et
où une pellicule de revêtement à obtenir a une dureté Knoop (JIS Z 2251) de 20 Hk ou plus et une capacité de résistance à la corrosion déterminée par un essai au brouillard salin de 1000 heures ou plus.

3. Composition de revêtement selon la revendication 1 ou la revendication 2, où la composition de revêtement comprend 3 à 15 parties en poids de nanofibres de carbone multicouche et 10 à 300 parties en poids du milieu de dispersion pour 100 parties en poids du liant en résine synthétique.

4. Composition de revêtement selon l'une quelconque des revendications 1 à 3, où le liant en résine synthétique comprend une résine thermodurcissable.

5. Composition de revêtement selon l'une quelconque des revendications 1 à 4, où le liant en résine synthétique comprend au moins une résine choisie parmi le groupe comprenant une résine de phénol, une résine époxy, une résine polyuréthane, une résine de silicone, une résine polyamideimide et une résine fluorée à base d'eau.

6. Composition de revêtement selon l'une quelconque des revendications 1 à 5, où le milieu de dispersion comprend un solvant polaire.

7. Composition de revêtement selon la revendication 6, où le milieu de dispersion comprend au moins un élément choisi parmi le groupe comprenant l'eau, les alcools, la N-méthyl-2-pyrrolidone, le diméthylacétamide, la méthyléthylecétone, et la méthylisobutylcétone.

8. Article revêtu, comprenant une pellicule de revêtement composée de la composition de revêtement selon l'une quelconque des revendications 1 à 7 sur au moins une partie d'une surface d'un substrat.

9. Article revêtu selon la revendication 8, où le substrat est sélectionné parmi le groupe comprenant une pièce industrielle métallique, un boulon/écrou, un roulement d'arbre, une pièce d'étanchéité, une bride de fixation, une rondelle, un sabot de frein, une pièce de vérin et une pièce coulissante d'une installation de fabrication de semi-conducteurs.
